# EUROPEAN PATENT SPECIFICATION

(11) **EP 2 542 632 B1**
(45) Date of publication and mention of the grant of the patent: **19.10.2016**
(21) Application number: 11750858.0
(22) Date of filing: 02.03.2011
(51) Int. Cl.: C09D 11/00, B41M 5/00

(54) **ACTIVE RAY CURABLE INK COMPOSITION, ACTIVE RAY CURABLE INKJET INK COMPOSITION AND PRINTING METHOD USING THE SAME**
DURCH AKTIVE STRAHLUNG HÄRTBARE TINTENZUSAMMENSETZUNG, DURCH AKTIVE STRAHLUNG HÄRTBARE TINTENSTRAHLTINTENZUSAMMENSETZUNG UND DRUCKVERFAHREN DAMIT
COMPOSITION D'ENCRE DURCISSABLE PAR RAYONNEMENTS ACTIFS, COMPOSITION D'ENCRE D'IMPRESSION JET D'ENCRE DURCISSABLE PAR RAYONNEMENTS ACTIFS ET PROCÉDÉ D'IMPRESSION L'UTILISANT

(30) Priority: 01.03.2011 JP 2011043618; 05.03.2010 JP 2010048586
(43) Date of publication of application: 09.01.2013
(73) Proprietor: Ricoh Company, Ltd., Tokyo 143-8555 (JP)
(72) Inventor: NOGUCHI, Soh, Tokyo 143-8555 (JP); KIMURA, Okitoshi, Tokyo 143-8555 (JP); ARIMITSU, Koji, Tokyo 162-8601 (JP)
(74) Representative: Lamb, Martin John Carstairs
(86) International application number: PCT/JP2011/055436
(87) International publication number: WO 2011/108757

(56) References cited:
- EP-A1- 1 505 090
- JP-A- 2007 101 685
- US-A1- 2008 105 162
- R. ENDO ET AL. POLYMER PREPRINTS, JAPAN vol. 58, no. 2, 01 September 2009, page 4148, XP008156898
- R. ENDO ET AL. POLYMER PREPRINTS, JAPAN vol. 58, no. 1, 12 May 2009, page 1350, XP008156899
- M. WASHIO ET AL. HIGH POLYMERS, JAPAN vol. 58, 2009, pages 923 - 928, XP008156897

## Description

### Technical Field

The present invention relates to an active ray curable ink composition, an active ray curable inkjet ink composition, and a printing method using any of the ink compositions.

### Background Art

Various printing methods are used currently. Among others, inkjet recording methods are applied to various printing fields since they can form images in a simple manner and at low cost. In general, inkjet inks used contain water as a solvent, and require exclusive paper for improving image quality. Thus, limitation is imposed on recording media employable, and also, problems such as cost elevation arise. Then, attempts have been made to develop inkjet methods applicable to recording on any recording media. Such inkjet methods include a phase transition inkjet method utilizing wax ink which is solid at room temperature, a solvent type inkjet method utilizing rapid-drying ink composed mainly of an organic solvent, and an ultraviolet (UV) inkjet method in which the ink is cured by UV light after recording.

However, printing speed has recently become higher and higher in the printing industry and, as a result, when the conventional aqueous or oily inks are employed, they may not be dried sufficiently.

To solve such a problem, active ray curable inks have been used which can be applied to any recording media and dried (cured) immediately through light irradiation.

For example, PTL 1 discloses an ink containing an alicyclic epoxy compound and at least one developing curing agent selected from an amine curing agent, an acid anhydride curing agent and an anion polymerization-type catalytic curing agent.

Also, NPL 1 discloses an ink containing a photoreaction initiator generating a base and a radical.

PTL 2 discloses an active ray curable inkjet ink employing cation polymerization and radical polymerization in combination, which contains an oxetane compound or an alicyclic epoxy compound, serving as a photopolymerizable compound, a (meth)acrylate compound, and a photoacid generator and a photoradical generator, serving as a photopolymerization initiator.

PTL 3 discloses an active ray curable inkjet ink employing cation polymerization and radical polymerization in combination, which contains a vinyl ether group-containing (meth)acrylic acid ester having in one molecule a cation-curable vinyl ether group and a radical-curable (meth)acryloyl group, and a hydroxyl group-containing polymerizable compound and/or a divinyl ether.

PTL 4 discloses an active energy ray curable resin composition containing a vinyl ether group-containing (meth)acrylic acid ester and a curable resin having at least one radical polymerizable group and/or ion polymerizable group.

PTL 5 discloses a method of curing an ink by performing radical, cation or anion polymerization reaction through plasma discharge.

Typical one of the above reaction systems is a reaction system employing a radical reactive compound and a photoradical initiator in combination. In this reaction system, although the reaction speed is high, the radials are deactivated by oxygen, so that the reaction is terminated before completion, potentially making it difficult to eliminate the residual monomer completely. Also, a reaction system employing a cation reactive compound and a photoacid generator in combination is known as one of the reaction systems that are not inhibited by oxygen. In this reaction system, the acid serving as a reactive species is not deactivated immediately, and thus, the reaction continues to proceed even after termination of light irradiation, resulting in that the residual monomer can be reduced. However, in general, the acid serving as a reactive species is a strong acid, which may disadvantageously corrode or modify a substrate. In addition, there are a few reaction systems employing an anion reactive compound and a photobase generator in combination. In these reaction systems, the reaction proceeds even by a weak base and thus, unlike the case of the cation reactive compound, corrosion does not arise. However, the reaction speed is very low, which is problematic.

### Citation List

### Patent Literature

PTL 1: Japanese Patent Application Laid-Open (JP-A) No. 2005-60520
PTL 2: JP-A No. 2006-213883
PTL 3: Japanese Patent (JP-B) No. 3544658
PTL 4: JP-A No. 2003-48928
PTL 5: JP-A No. 2005-523803

### Non-Patent Literature

NPL 1: Polymer Preprints, Japan Vol.58, No.1 (2009), 1350

### Summary of Invention

### Technical Problem

The present invention solves the above existing problems and aims to achieve the following objects. Specifically, an object of the present invention is to provide an active ray curable ink composition, an active ray curable inkjet ink composition and a printing method using the same, in which the ink composition can be rapidly cured, high-quality images can be rapidly printed on various recording media, and the residual monomer can be reduced.

### Solution to Problem

The present inventors conducted extensive studies and have found that the above object can be achieved by using an active ray curable ink composition containing a photoreaction initiator that generates both a base and a radical through irradiation of active rays and a compound that has both a functional group reactive with the base and a functional group reactive with the radical. The present invention can be accomplished on the basis of this finding.

The present invention is based on the finding obtained by the present inventors, and means for solving the existing problems are as follows.
<1> An active ray curable ink composition including:
   a photoreaction initiator generating both a base and a radical through irradiation of active rays, and
   a compound having both a functional group reactive with the base and a functional group reactive with the radical.
<2> The active ray curable ink composition according to <1>, wherein at least one of the functional group reactive with the base and the functional group reactive with the radical is a functional group reactive with both the base and the radical.
<3> The active ray curable ink composition according to <2>, wherein the compound has two or more of the functional group reactive with both the base and the radical, and at least one of the two or more of the functional groups reactive with both the base and the radical has a different molecular structure from the other functional group or the other functional groups.
<4> The active ray curable ink composition according to <1> or <2>, wherein the functional group reactive with the base is a functional group that is reactive with the base but is not reactive with the radical.
<5> The active ray curable ink composition according to <1>, wherein the compound having both the functional group reactive with the base and the functional group reactive with the radical is a compound having both a functional group that is reactive with the base but is not reactive with the radical and a functional group reactive with both the base and the radical.
<6> The active ray curable ink composition according to <4> or <5>, wherein the functional group that is reactive with the base but is not reactive with the radical is an epoxy group or a lactone group.
<7> The active ray curable ink composition according to any one of <2>, <3>, <5> and <6>, wherein the functional group reactive with both the base and the radical is a (meth)acryl group, a vinyl group, a mercapto group, a silyl group or a meleimide group.
<8> The active ray curable ink composition according to any one of <1> to <7>, wherein the photoreaction initiator is a compound represented by General Formula (I): 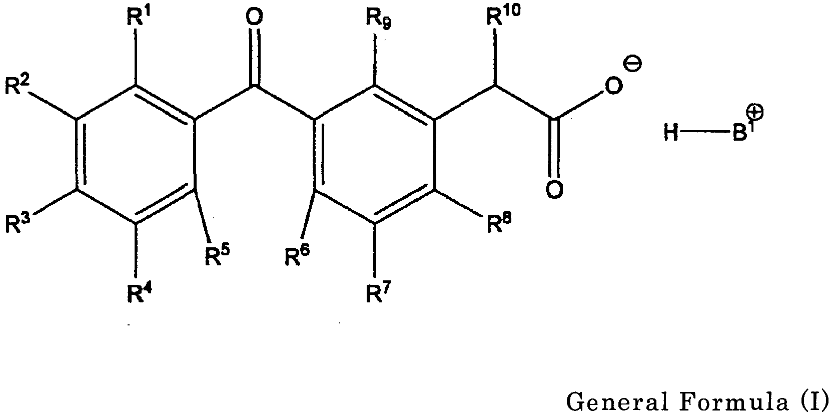 where B¹ denotes a base, and R¹ to R¹⁰ each independently represent a hydrogen atom, an alkyl group which may have a substituent, an alkoxy group which may have a substituent, an aryl group which may have a substituent, a hydroxy group, a halogen atom or a cyano group.
<9> The active ray curable ink composition according to any one of <1> to <8>, wherein the photoreaction initiator is a compound represented by General Formula (II): 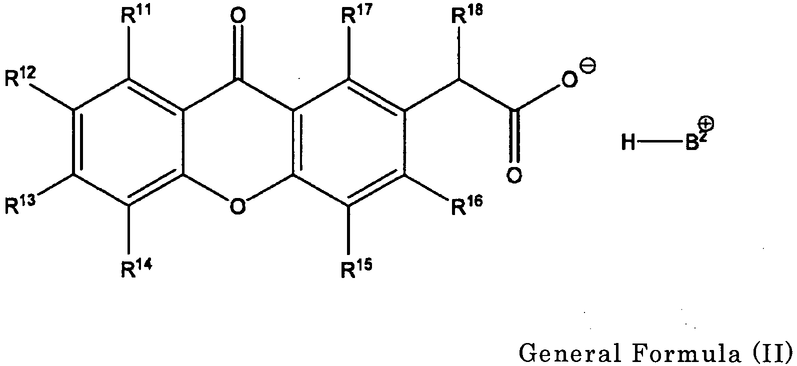 where B² denotes a base, and R¹¹ to R¹⁸ each independently represent a hydrogen atom, an alkyl group which may have a substituent, an alkoxy group which may have a substituent, an aryl group which may have a substituent, a hydroxy group, a halogen atom or a cyano group.
<10> The active ray curable ink composition according to <8> or <9>, wherein H-B¹ or H-B² in General Formula (I) or (II) is an amidine derivative, a guanidine derivative, a phosphazene derivative or a group represented by General Formula (III) below: 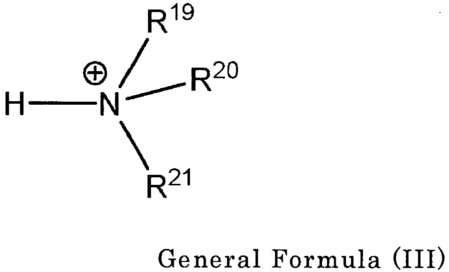 where R¹⁹ to R²¹ each independently represent a hydrogen atom, an alkyl group which may have a substituent, a cycloalkyl group, an aryl group or an arylalkyl group, and R¹⁹ to R²¹ may be linked together to form a ring which may have a substituent.
<11> An active ray curable inkjet ink composition for use in inkjet printing, including:
   the active ray curable ink composition according to any one of <1> to <10>.
<12> A printing method including:
   coating an ink receiving material with the active ray curable ink composition according to any one of <1> to <10> or with the active ray curable inkjet ink composition according to <11>, and
   irradiating the coated active ray curable ink composition or the coated active ray curable inkjet ink composition with active rays for curing.

### Advantageous Effects of Invention

The present invention can provide an ink composition, an inkjet ink composition and a printing method using any of these, in which the ink composition can be rapidly cured, high-quality images can be rapidly printed on various recording media, and the residual monomer can be reduced, by allowing an active ray curable ink composition and an active ray curable inkjet ink composition to incorporate a photoreaction initiator generating both a base and a radical and a compound that has both a functional group reactive with the base and a functional group reactive with the radical. These can solve the above existing problems and can achieve the above object.

### Description of Embodiments

### (Active ray curable ink composition)

An active ray curable ink composition (hereinafter may be referred to as an "ink") of the present invention includes at least a photoreaction initiator generating both a base and a radical through irradiation of active rays, and a compound that has both a functional group reactive with the base and a functional group reactive with the radical.

One typical known active ray curable ink composition is a system containing a radical-reactive compound (radical monomer) and a photoradical initiator. The general feature of this system is, for example, that the reaction is allowed to proceed very rapidly. In the conventional cases, however, the radicals generated through light irradiation are immediately deactivated by oxygen in the air, resulting in that the reaction is terminated before completion in some cases. As a result, low-molecular-weight radical monomers remain in the ink, and problems may arise in terms of, for example, safety.

Another known system is a system containing a cation-reactive compound (cation monomer) and a photoacid generator. The feature of this system is reducing the residual monomer. This is because a strong acid (reactive species) is not degraded by oxygen (but degraded by water or a base) and the reaction proceeds even after termination of light irradiation (post-curing). However, the strong acid may problematically corrode or modify printing media.

Still another known system is a system containing anion-reactive compound (anion monomer) and a photobase generator. Similar to the case of the cation monomer, the reaction in this system proceeds even after termination of light irradiation. In addition, since a weak base can be used, corrosion or modification of printing media is difficult to occur. However, the reaction speed of this system is low and thus, for example, the printing speed cannot be set high in some cases.

In view of this, the present invention combines a radical reaction, which attains very rapid curing speed, with an anion reaction, in which the reaction speed is low but post-curing can be performed and there is no adverse effect on media. Also, the amount of the residual monomer can be reduced by using a monomer having both a radical reactive site and an anion reactive site in one molecule thereof. When the radical reaction and the anion reaction are used in combination, it is possible to attain both high-speed curing due to the radical reaction and residual monomer reduction due to post-curing in the anion reaction.

Further, use of a photoreaction initiator generating both a base and a radical tends to prevent localization of the base and radical generated. Notably, when a photobase generator and a photoradical initiator are added separately, the amount of the additives (initiators) used may be disadvantageously increased as compared with when using the photoreaction initiator generating both a base and a radical. Also, in order to increase the reaction speed, a photoradical initiator may further be added.

In order to improve jetting stability, storage stability and other properties, various additives such as a colorant may be added to the ink, if necessary. In addition, various solvents may be incorporated into the ink for the purpose of, for example, adjusting the viscosity of the ink. When the colorant is added to the ink, active rays may be difficult to reach the inside of the ink. In the conventional radical reaction systems, curing may not be completed in some cases. Meanwhile, the present invention combines the radical reaction system with the anion reaction system in which post-curing is performed. Thus, there is a possibility that even portions which active rays are difficult to reach can be satisfactorily cured.

In recent years, there has been increased desire to an on-demand system, and a high-speed, high-reliable head has been used. Then, in the printing industry, commercial printing employing the inkjet method has been increasingly performed. The ink of the present invention may be used for inkjet application.

### <Compound>

The compound is not particularly limited, so long as it has both a functional group reactive with the base and a functional group reactive with the radical, and may be appropriately selected depending on the intended purpose. In the compound, at least one of the functional group reactive with the base and the functional group reactive with the radical is preferably a functional group reactive with both the base and the radical.

Also, the compound preferably has two or more of the functional group reactive with both the base and the radical. In the compound having two or more of the functional group reactive with both the base and the radical, the two or more of the functional group reactive with both the base and the radical may be all the same or at least one of the two or more of the functional group reactive with both the base and the radical may have a different molecular structure from the other functional group or the other functional groups. Preferably, at least one of the two or more of the functional group reactive with both the base and the radical has a different molecular structure from the other functional group or the other functional groups.

Notably, the "two or more" is not particularly limited and may be appropriately selected depending on the intended purpose. The number of the functional groups reactive with both the base and the radical is preferably 2 to 6 per compound.

Also, the functional group reactive with the base is preferably a functional group that is reactive with the base but is not reactive with the radical. The above compound is preferably a compound having both the functional group that is reactive with the base but is not reactive with the radical and the functional group reactive with both the base and the radical

Notably, per the above compound, the number of at least one selected from the functional group reactive with the base, the functional group reactive with the radical, the functional group reactive with both the base and the radical, and the functional group that is reactive with the base but is not reactive with the radical is not particularly limited and may be appropriately selected depending on the intended purpose. Thu number thereof is preferably 2 to 6.

### «Functional group»

### -Functional group reactive with the base-

Examples of the functional group reactive with the base include various known anion-reactive functional groups.

### -Functional group reactive with the radical-

Examples of the functional group reactive with the radical include various known radical-reactive functional groups.

### -Functional group reactive with both the base and the radical-

Examples of the functional group reactive with both the base and the radical include various known radical-reactive and anion-reactive functional groups. In particular, a (meth)acryl group, a vinyl group, a mercapto group, a silyl group and a maleimide group are preferred in view that the curing reaction speed becomes easily high. Specific compounds having such a functional group are those given below, but employable compounds should not be construed as being limited thereto.

Notably, examples of the compound having two or more of the functional group reactive with both the base and the radical include the following compounds (A-1) to (A-12).

Also, examples of the compound having two or more of the functional group reactive with both the base and the radical where at least one of the two or more of the functional group reactive with both the base and the radical has a different molecular structure from the other functional group or the other functional groups, include the following compounds (A-5), (A-6), (A-9) and (A-12).

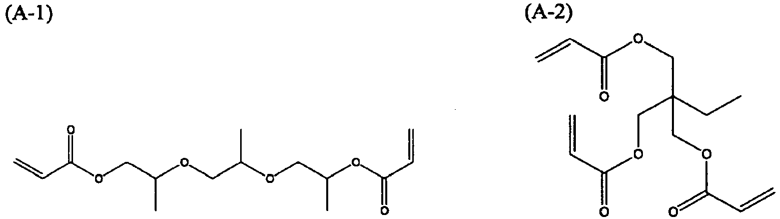

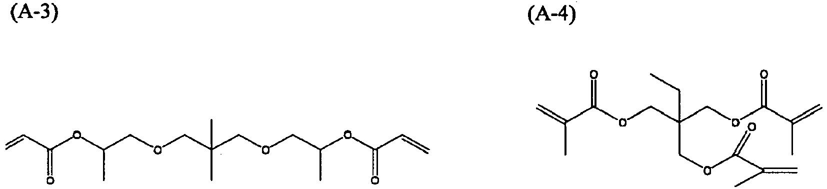

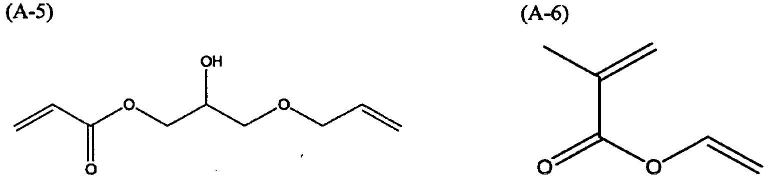

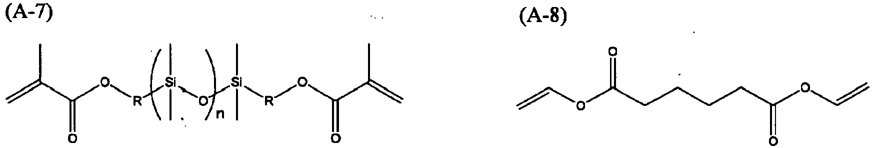

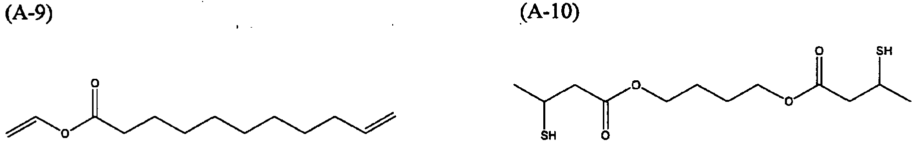

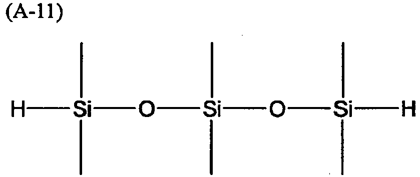

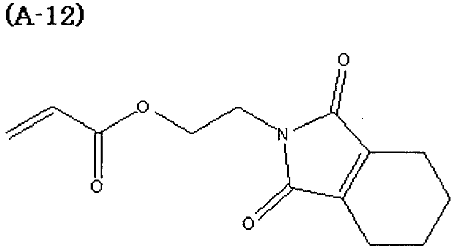

### -Functional group that is reactive with the base but is not reactive with the radical-

Examples of the functional group that is reactive with the base but is not reactive with the radical include various known anion-reactive functional groups. In particular, an epoxy group and a lactone group are preferred in view that the curing reaction speed becomes easily high.

The below-exemplified compounds are compounds having the functional group that is reactive with the base but is not reactive with the radical (epoxy group and lactone group) in addition to the functional group reactive with both the base and the radical. However, employable compounds should not be construed as being limited thereto.

When the above compound has the functional group that is reactive with the base but is not reactive with the radical as described above, the unreacted portions after radical reaction are easily post-cured, which is preferred.

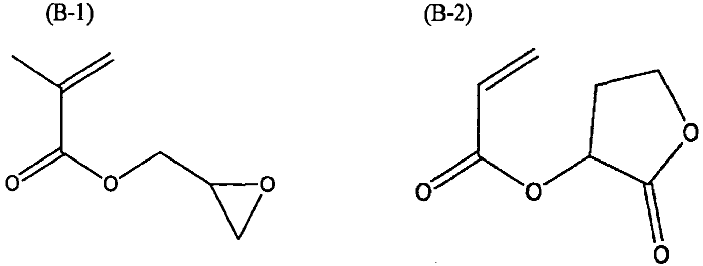

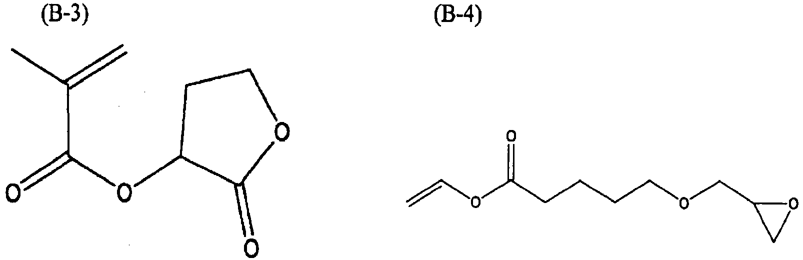

### <Photoreaction initiator>

The photoreaction initiator is not particularly limited, so long as it generates both a base and a radial through irradiation of active rays, and may be appropriately selected from various known compounds. Examples thereof include compounds represented by General Formula (I) or (II) and photoreaction initiators described in, for example, JP-B No. 3250072 and JP-A Nos. 10-251615, 2006-282880 and 2009-244745. Among them, particularly preferred are compounds represented by General Formula (I) or (II). 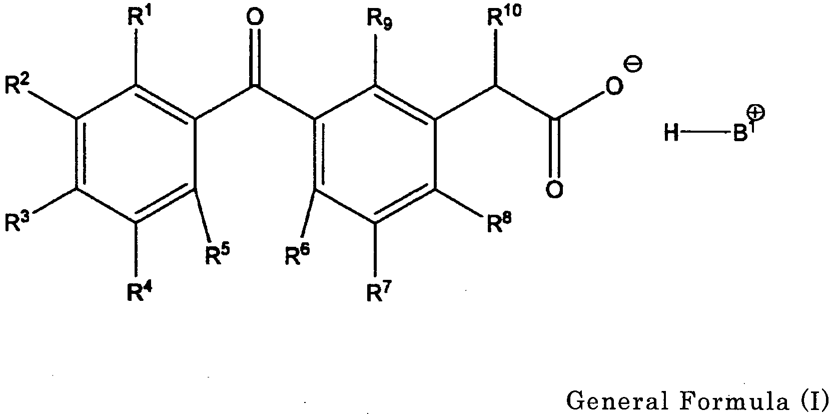 where B¹ denotes a base, and R¹ to R¹⁰ each independently represent a hydrogen atom, an alkyl group which may have a substituent, an alkoxy group which may have a substituent, an aryl group which may have a substituent, a hydroxy group, a halogen atom or a cyano group.

Here, the alkyl group is preferably a C1-C7 alkyl group, the alkoxy group is preferably C1-C2 alkoxy group, and the aryl group is preferably C6-C10 aryl group. 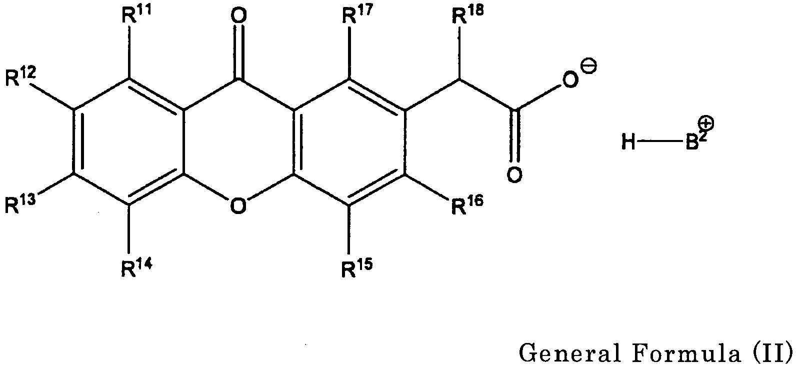 where B² denotes a base, and R¹¹ to R¹⁸ each independently represent a hydrogen atom, an alkyl group which may have a substituent, an alkoxy group which may have a substituent, an aryl group which may have a substituent, a hydroxy group, a halogen atom or a cyano group.

Here, the alkyl group is preferably a C1-C7 alkyl group, the alkoxy group is preferably C1-C2 alkoxy group, and the aryl group is preferably C6-C10 aryl group.

H-B¹ and H-B² in General Formulas (I) and (II) are each preferably an amidine derivative, a guanidine derivative, a phosphazene derivative or a group represented by General Formula (III) below. 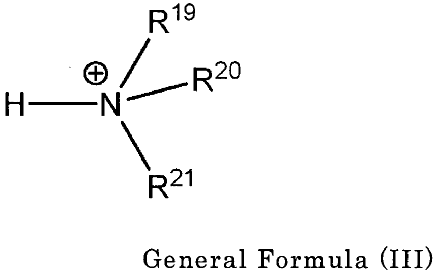 where R¹⁹ to R²¹ each independently represent a hydrogen atom, an alkyl group which may have a substituent, a cycloalkyl group, an aryl group or an arylalkyl group, and R¹⁹ to R²¹ may be linked together to form a ring which may have a substituent.

Here, the alkyl group is preferably a C1-C7 alkyl group, the cycloalkyl group is preferably C5-C6 cycloalkyl group, the aryl group is preferably C6-C10 aryl group, and the arylalkyl group is preferably C7-C12 arylalkyl group.

Compound H-B¹ or H-B² containing base B¹ or B² is not particularly limited and may be appropriately selected depending on the intended purpose. Examples thereof include primary amines such as n-butylamine, amylamine, hexylamine, octylamine, cyclohexylamine, ethylenediamine, propylenediamine, trimethylenediamine, tetramethylenediamine, pentamethylenediamine, hexamethylenediamine, diethylenetriamine, tris(2-aminoethyl)amine and pyridine; secondary amines such as diethylamine, dipropylamine, diisopropylamine, diisobutylamine, pyrrolidine and piperidine; tertially amines such as trimethylamine, triethylamine, tripropylamine, tributylamine, 1,4-diazabicyclo[2.2.2]octane and tetramethylenediamine; imidazoles such as imidazole, 1-methylimidazole, 2-methylimidazole, 2-phenylimidazole, 3-(4,5-dihydro-2-imidazolyl)pyridine, 2-benzylimidazole, 4-(4,5-dihydro-1H-imidazol-2-yl)phenylamine,
3A,4,5,6,7,7A-hexahydro-1H-benzimidazol-2-yl methyl sulfide, 2-(4-bromophenyl)4,5-dihydro-1H-imidazole,
1-[3-(triethoxysilyl)propyl]-4,5-dihydro-1H-imidazole and DL-isoamarine; amidines such as diazabicyclononene (DBN) and diazabicycloundecene (DBU); guanidines such as guanidine, 1,1,3,3-tetramethylguanidine and
1,5,7-triazabicyclo[4.4.0]dec-5-ene (TBD); a methyl-substituted product of TBD, an ethyl-substituted product of TBD, and an isopropyl-substituted product of TBD; and phosphazenes such as methylimino-tris(dimethylamino)phosphorane, t-butylimino-tris(dimethylamino)phosphorane, t-butylimino-2-diethylamino-1,3-dimethylperhydro-1,3,2-diazaph osphorine and
1-t-butylimino-hepta(dimethylamino)triphosphorane.

Specific examples of the compounds represented by General Formulas (I) to (II) include the following compounds, but employable compounds should not be construed as being limited thereto.

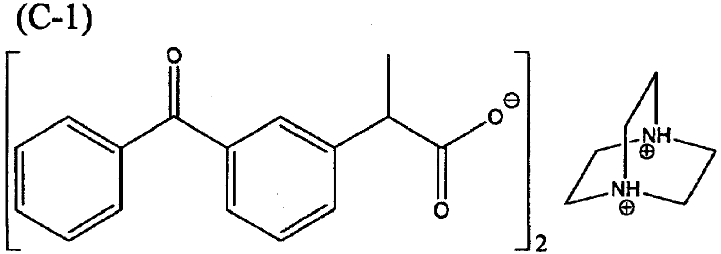

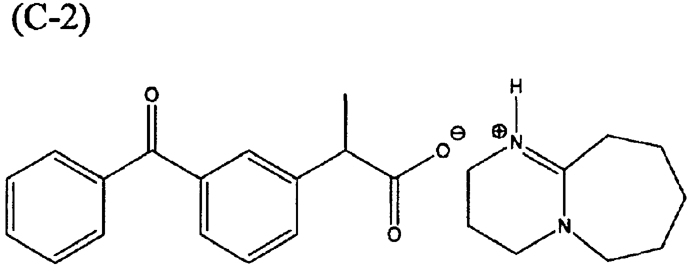

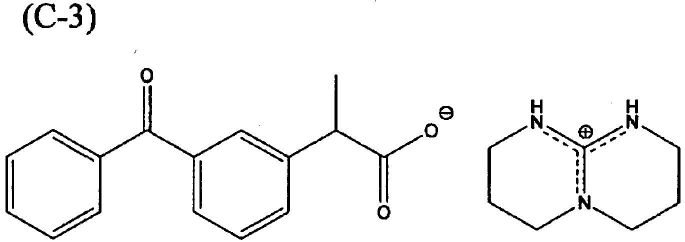

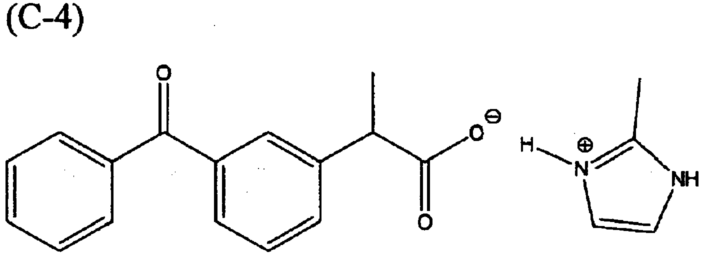

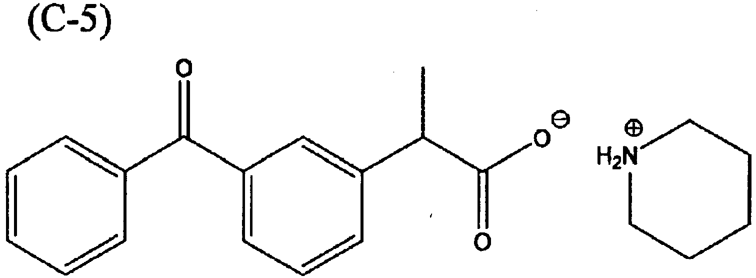

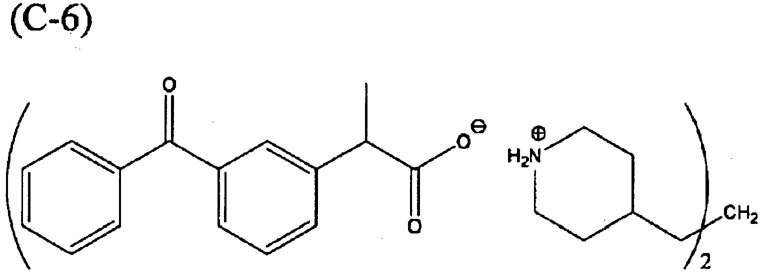

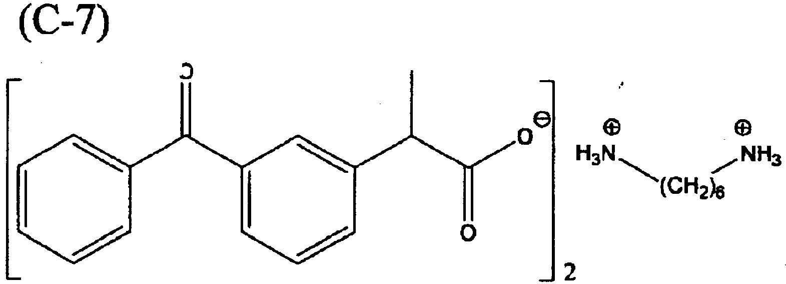

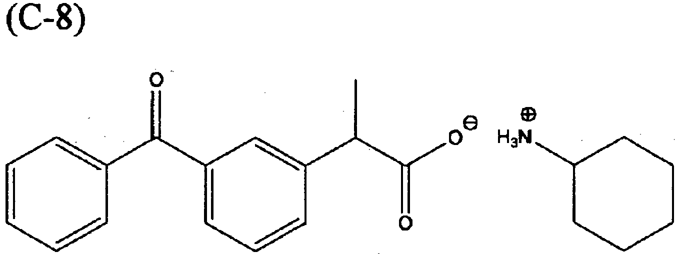

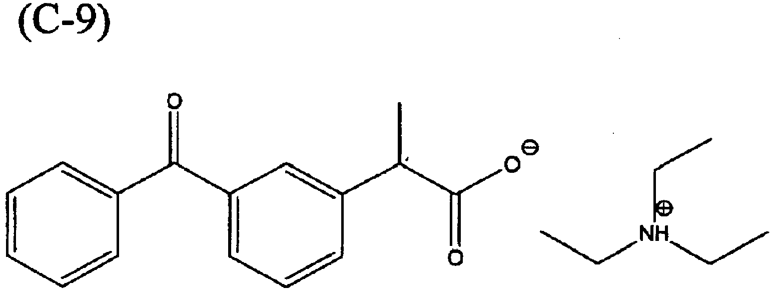

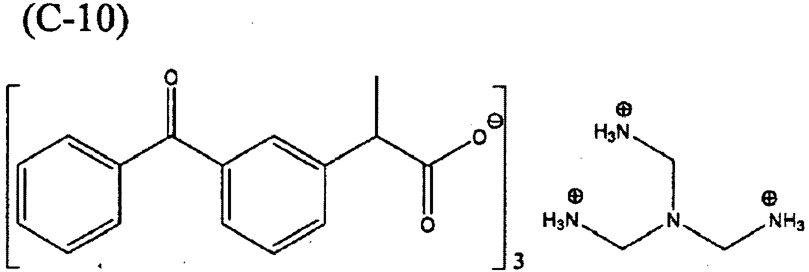

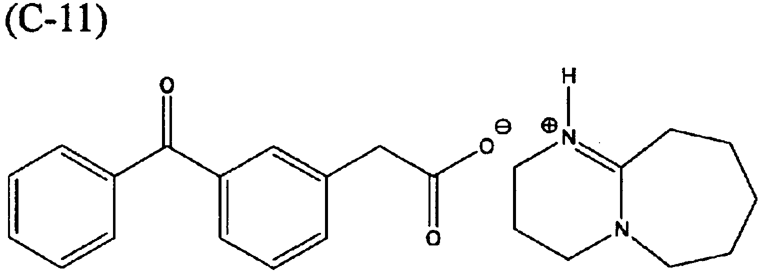

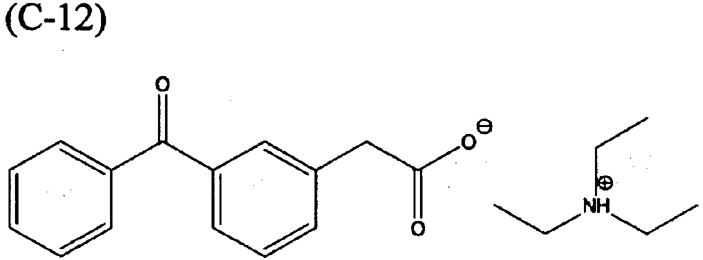

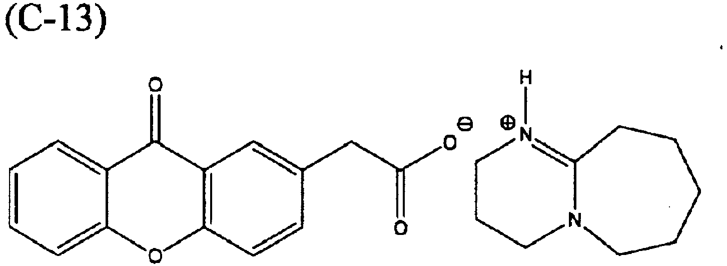

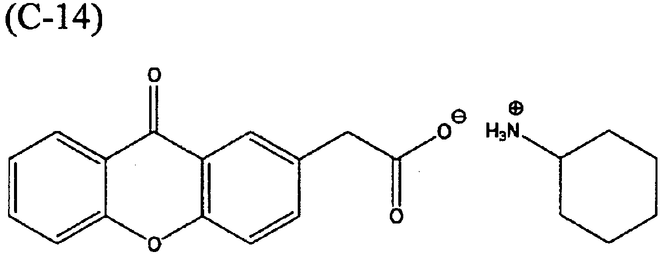

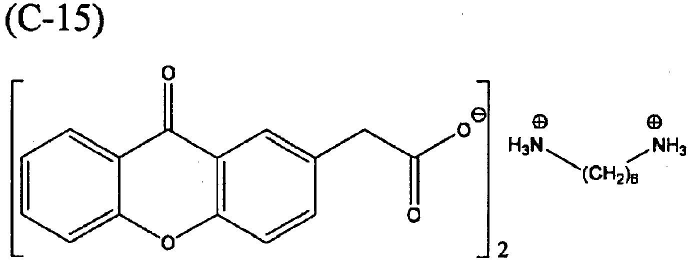

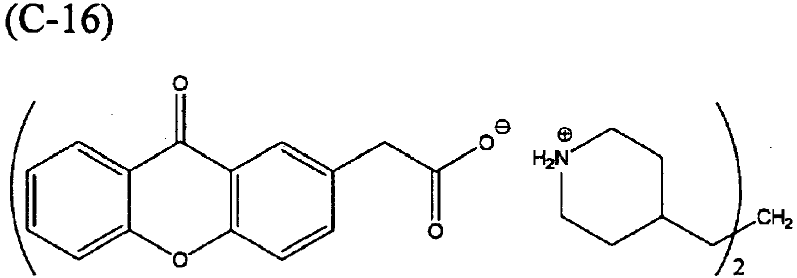

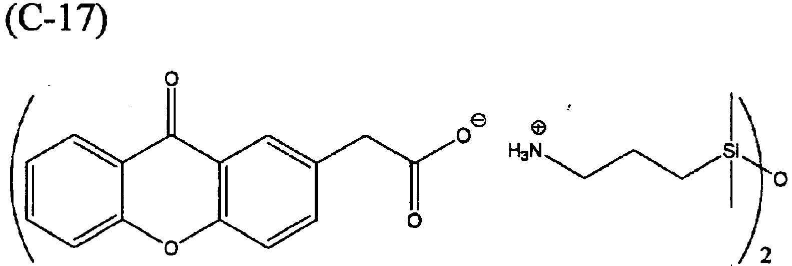

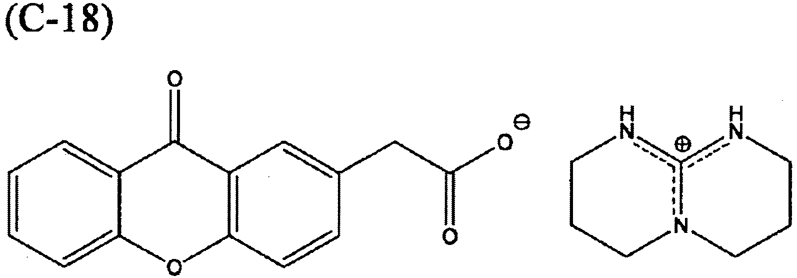

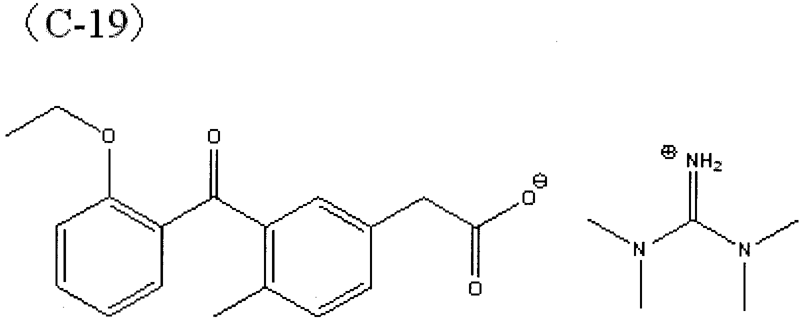

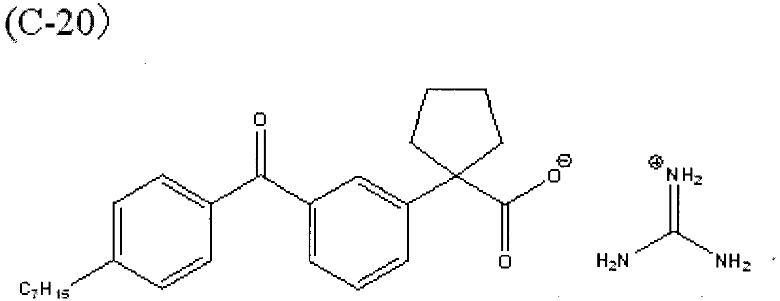

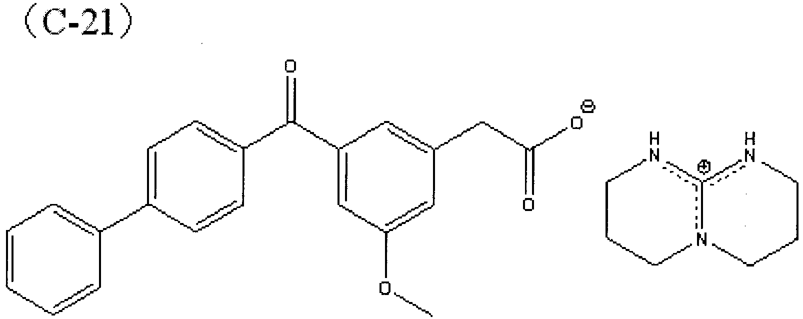

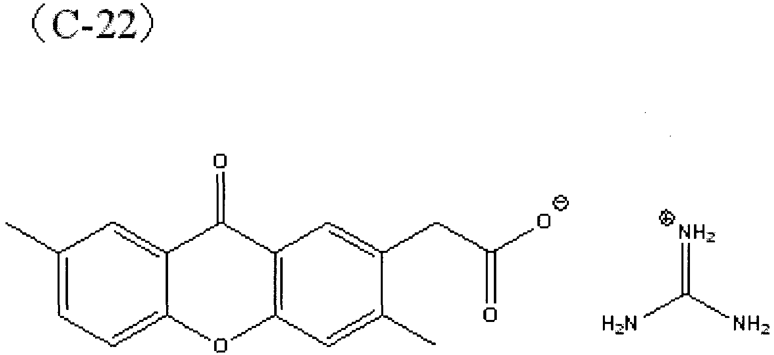

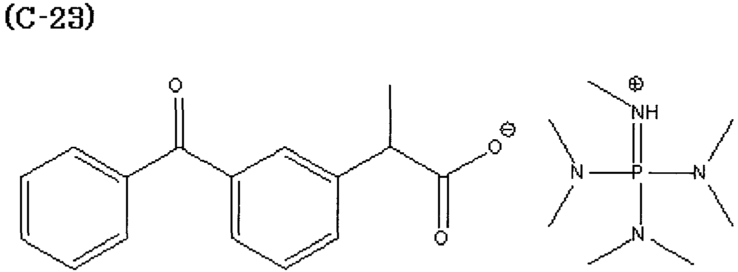

The amount of the photoreaction initiator added is generally about 3 parts by mass to about 15 parts by mass relative to 100 parts by mass of the polymerizable compound.

The colorant may be various known dyes and pigments. When a pigment is used, a dispersing agent may optionally be used together. Colorants excellent in light stability and color reproducibility are particularly preferred. Also, preferred are colorants which give no adverse effects on the curing reaction and which do not function as a polymerization inhibitor.

The ink receiving material usable for the present invention may be various known materials. Examples thereof include papers such as plain paper and coat paper; and non-permeable materials such as plastic films, metal and glass.

### <Active ray curable inkjet ink composition for inkjet printing and printing method>

An active ray curable inkjet ink composition (hereinafter referred to as an "inkjet ink") of the present invention contains the above-described ink.

Next, description will be given to the ink and inkjet printing method (hereinafter referred to as a "printing method") of the present invention. The printing method of the present invention includes coating an ink receiving material with the ink and inkjet ink of the present invention and applying active rays to the ink and inkjet ink for photocuring, and can increase durability and hardness of the printed product. The active rays are appropriately selected depending on the sensitive wavelength of the photoinitiator and sensitizer, but UV rays are preferably used. The light source thereof may be various known light sources such as mercury lamps, metal halide lamps, xenon lamps and LEDs.

### Examples

The present invention will next be described by way of Examples, which should not be construed as limiting the present invention thereto.

Note that the unit "part(s)" described below means "part(s) by mass."

### [Examples 1 to 11 and Comparative Examples 1 to 3]

The materials shown in Table 1 were used to prepare ink compositions of Examples and Comparative Examples so as to have proportions shown in Table 1. The pigments used are as follows.
CB: Carbon Black pigment (product of Ciba Japan, MICROLITH Black C-K),
Blue: product of Ciba Japan, MICROLITH Blue 4G-K

In Comparative Examples, the following compounds were used as the photoreaction initiator and the reactive compound.

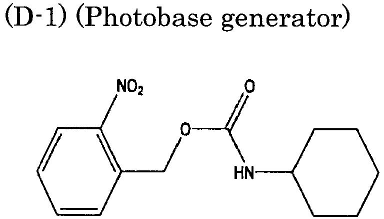

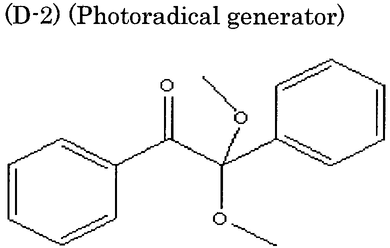

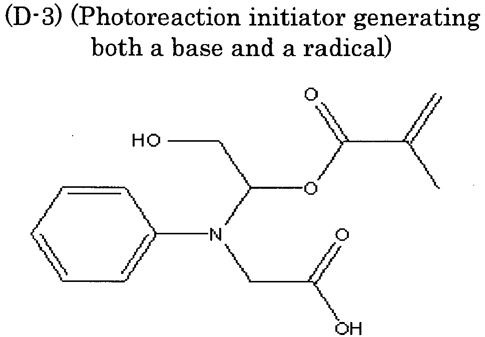

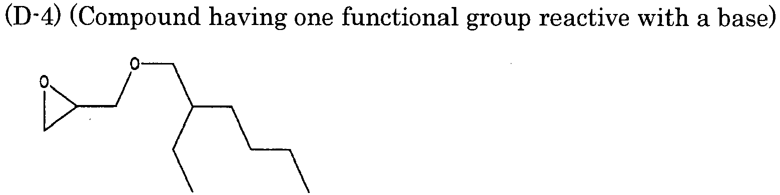

### [Evaluation]

### (Evaluation method)

Each of the inks of Examples and Comparative Examples was exposed to light using a high-pressure mercury lamp. The cured resin was immersed in methanol and then the dissolved matter was extracted and measured through IR for the amount of the residual monomer of the ink.

### (Evaluation results)

Evaluation results are shown in Table 1.
- From Examples 1 to 11, the ink compositions of the present invention could be cured by a small amount of curing energy, and also, involved no residual monomer.
- From Comparative Example 1, the compound having no functional group reactive with the radical needs a large amount of curing energy; i.e., rapid curing cannot be performed.

• From Comparative Example 2, the ink composition containing the initiator generating no radicals needs a large amount of curing energy; i.e., rapid curing cannot be performed.
• From Comparative Example 3, the ink composition containing the initiator generating no base involves the residual monomer.

**Table 1**

| Ink | Monomer | Initiator | Pigment | Dose | Residual monomer |
|---|---|---|---|---|---|
| Ex. 1 | B-1 (100) | C-1 (10) | - | 100 | Absence |
| Ex. 2 | B-2 (100) | C-18 (5) | - | 7.2 | Absence |
| Ex. 3 | B-2 (100) | C-18 (5) | CB (3) | 20 | Absence |
| Ex. 4 | B-2 (100) | C-18 (5) | Blue (3) | 16 | Absence |
| Ex. 5 | A-1 (100) | C-3 (10) | - | 1.2 | Absence |
| Ex. 6 | B-3 (100) | C-15 (10) | CB (3) | 50 | Absence |
| Ex. 7 | A-6 (100) | C-10 (8) | CB (3) | 100 | Absence |
| Ex. 8 | A-5 (50)/B-3 (50) | C-4 (8) | CB (3) | 30 | Absence |
| Ex. 9 | A-2 (100) | C-3 (5)/C-20 (5) | - | 15 | Absence |
| Ex. 10 | A-4 (100) | C-3 (3) | - | 5 | Absence |
| Ex. 11 | B-1 (100) | D-4 (5) | - | 130 | Absence |
| Comp. Ex. 1 | D-3 (100) | C-2 (10) | - | 500 | Absence |
| Comp. Ex. 2 | B-1 (100) | D-1 (10) | - | * | Presence |
| Comp. Ex. 3 | B-1 (100) | D-2 (10) | - | 70 | Presence |

| | | | | | |
|---|---|---|---|---|---|
| In the Table, the values in parentheses are amounts of the respective materials (unit: parts), and the unit of dose is J/cm². *: Not cured at 1,000 J/cm² | | | | | |

### Industrial Applicability

The active ray curable ink composition of the present invention can be used to rapidly print high-quality images on various recording media since the ink composition can be rapidly cured. In addition, since the residual monomer can be reduced, the active ray curable ink composition can be suitably used as an ink in various printing fields such as photographing, various printing and marking.

## Claims

1. An active ray curable ink composition comprising:
a photoreaction initiator generating both a base and a radical through irradiation of active rays, and
a compound having both a functional group reactive with the base and a functional group reactive with the radical.

2. The active ray curable ink composition according to claim 1, wherein at least one of the functional group reactive with the base and the functional group reactive with the radical is a functional group reactive with both the base and the radical.

3. The active ray curable ink composition according to claim 2, wherein the compound has two or more of the functional group reactive with both the base and the radical, and at least one of the two or more of the functional groups reactive with both the base and the radical has a different molecular structure from the other functional group or the other functional groups.

4. The active ray curable ink composition according to claim 1 or 2, wherein the functional group reactive with the base is a functional group that is reactive with the base but is not reactive with the radical.

5. The active ray curable ink composition according to claim 1, wherein the compound having both the functional group reactive with the base and the functional group reactive with the radical is a compound having both a functional group that is reactive with the base but is not reactive with the radical and a functional group reactive with both the base and the radical.

6. The active ray curable ink composition according to claim 4 or 5, wherein the functional group that is reactive with the base but is not reactive with the radical is an epoxy group or a lactone group.

7. The active ray curable ink composition according to any one of 2, 3, 5 and 6, wherein the functional group reactive with both the base and the radical is a (meth)acryl group, a vinyl group, a mercapto group, a silyl group or a meleimide group.

8. The active ray curable ink composition according to any one of claims 1 to 7, wherein the photoreaction initiator is a compound represented by General Formula (I): 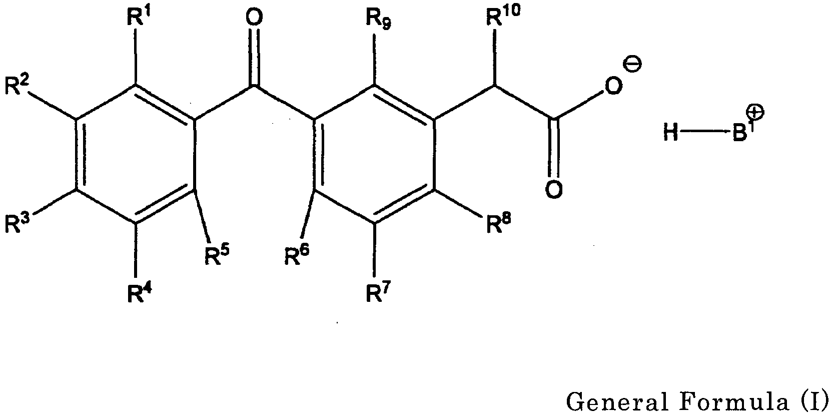 where B¹ denotes a base, and R¹ to R¹⁰ each independently represent a hydrogen atom, an alkyl group which may have a substituent, an alkoxy group which may have a substituent, an aryl group which may have a substituent, a hydroxy group, a halogen atom or a cyano group.

9. The active ray curable ink composition according to any one of claims 1 to 8, wherein the photoreaction initiator is a compound represented by General Formula (II): 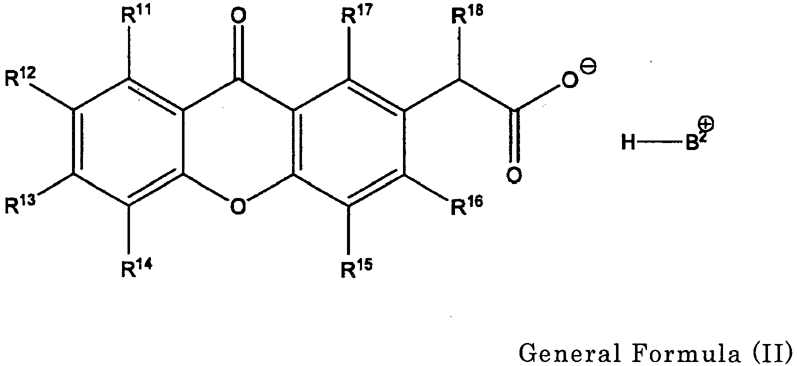 where B² denotes a base, and R¹¹ to R¹⁸ each independently represent a hydrogen atom, an alkyl group which may have a substituent, an alkoxy group which may have a substituent, an aryl group which may have a substituent, a hydroxy group, a halogen atom or a cyano group.

10. The active ray curable ink composition according to claim 8 or 9, wherein H-B¹ or H-B² in General Formula (I) or (II) is an amidine derivative, a guanidine derivative, a phosphazene derivative or a group represented by General Formula (III) below: 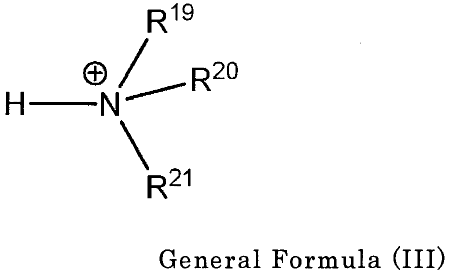 where R¹⁹ to R²¹ each independently represent a hydrogen atom, an alkyl group which may have a substituent, a cycloalkyl group, an aryl group or an arylalkyl group, and R¹⁹ to R²¹ may be linked together to form a ring which may have a substituent.

11. An active ray curable inkjet ink composition for use in inkjet printing, comprising:
the active ray curable ink composition according to any one of claims 1 to 10.

12. A printing method comprising:
coating an ink receiving material with the active ray curable ink composition according to any one of claims 1 to 10 or with the active ray curable inkjet ink composition according to claim 11, and
irradiating the coated active ray curable ink composition or the coated active ray curable inkjet ink composition with active rays for curing.

## Patentansprüche

1. Durch aktive Strahlung härtbare Tintenzusammensetzung umfassend:
einen Fotoreaktionsinitiator, der sowohl eine Base als auch ein Radikal durch Strahlung aktiver Strahlen erzeugt, und
eine Verbindung, die sowohl eine funktionelle Gruppe, die mit der Base reaktiv ist, als auch eine funktionelle Gruppe, die mit dem Radikal reaktiv ist, aufweist.

2. Durch aktive Strahlung härtbare Tintenzusammensetzung nach Anspruch 1, wobei mindestens eine von der funktionellen Gruppe, die mit der Base reaktiv ist, und der funktionellen Gruppe, die mit dem Radikal reaktiv ist, eine funktionelle Gruppe ist, die sowohl mit der Base als auch dem Radikal reaktiv ist.

3. Durch aktive Strahlung härtbare Tintenzusammensetzung nach Anspruch 2, wobei die Verbindung zwei oder mehr der funktionellen Gruppe aufweist, die sowohl mit der Base als auch dem Radikal reaktiv sind, und mindestens eine der beiden oder mehreren funktionellen Gruppen, die sowohl mit der Base als auch dem Radikal reaktiv sind, eine andere molekulare Struktur als die andere funktionelle Gruppe oder die anderen funktionellen Gruppen aufweist.

4. Durch aktive Strahlung härtbare Tintenzusammensetzung nach Anspruch 1 oder 2, wobei die funktionelle Gruppe, die mit der Base reaktiv ist, eine funktionelle Gruppe ist, die mit der Base reaktiv, aber mit dem Radikal nicht reaktiv ist.

5. Durch aktive Strahlung härtbare Tintenzusammensetzung nach Anspruch 1, wobei die Verbindung, die sowohl die funktionelle Gruppe, die mit der Base reaktiv ist, als auch die funktionelle Gruppe, die mit dem Radikal reaktiv ist, eine Verbindung ist, die sowohl eine funktionelle Gruppe, die mit der Base reaktiv, jedoch mit dem Radikal nicht reaktiv ist, als auch eine funktionelle Gruppe, die sowohl mit der Base als auch dem Radikal reaktiv ist, aufweist.

6. Durch aktive Strahlung härtbare Tintenzusammensetzung nach Anspruch 4 oder 5, wobei die funktionelle Gruppe, die mit der Base reaktiv, jedoch mit dem Radikal nicht reaktiv ist, eine Epoxygruppe oder eine Lactongruppe ist.

7. Durch aktive Strahlung härtbare Tintenzusammensetzung nach einem der Ansprüche 2, 3, 5 und 6, wobei die funktionelle Gruppe, die sowohl mit der Base als auch dem Radikal reaktiv ist, eine (Meth)acrylgruppe, eine Vinylgruppe, eine Mercaptogruppe, eine Silylgruppe oder eine Maleimidgruppe ist.

8. Durch aktive Strahlung härtbare Tintenzusammensetzung nach einem der Ansprüche 1 bis 7, wobei der Fotoreaktionsinitiator eine Verbindung ist, die durch die allgemeine Formel (I) dargestellt ist: 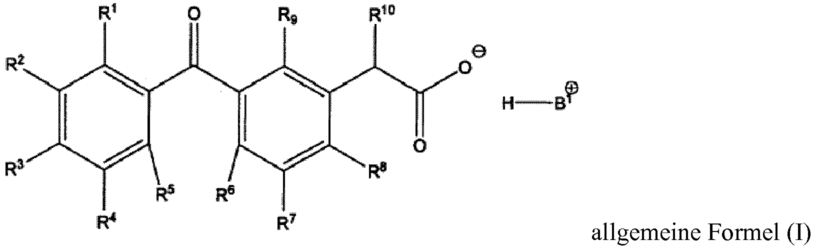 wobei B¹ eine Base anzeigt und R¹ bis R¹⁰ jeweils unabhängig ein Wasserstoffatom, eine Alkylgruppe, die einen Substituenten aufweisen kann, eine Alkoxygruppe, die einen Substituenten aufweisen kann, eine Arylgruppe, die einen Substituenten aufweisen kann, eine Hydroxygruppe, ein Halogenatom oder eine Cyanogruppe darstellen.

9. Durch aktive Strahlung härtbare Tintenzusammensetzung nach einem der Ansprüche 1 bis 8, wobei der Fotoreaktionsinitiator eine Verbindung ist, die durch die allgemeine Formel (II) dargestellt ist: 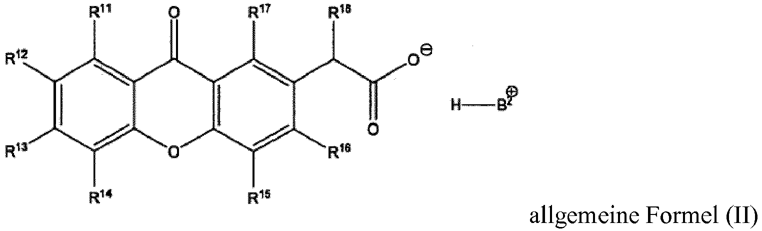 wobei B² eine Base anzeigt und R¹¹ bis R¹⁸ jeweils unabhängig ein Wasserstoffatom, eine Alkylgruppe, die einen Substituenten aufweisen kann, eine Alkoxygruppe, die einen Substituenten aufweisen kann, eine Arylgruppe, die einen Substituenten aufweisen kann, eine Hydroxygruppe, ein Halogenatom oder eine Cyanogruppe darstellen.

10. Durch aktive Strahlung härtbare Tintenzusammensetzung nach Anspruch 8 oder 9, wobei H-B¹ oder H-B² in der allgemeinen Formel (I) oder (II) ein Amidinderivat, ein Guanidinderivat, ein Phosphazenderivat oder eine Gruppe ist, die durch die allgemeine Formel (III) unten dargestellt ist: 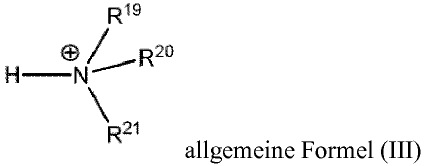 wobei R¹⁹ bis R²¹ jeweils unabhängig ein Wasserstoffatom, eine Alkylgruppe, die einen Substituenten aufweisen kann, eine Cycloalkylgruppe, eine Arylgruppe oder eine Aralkylgruppe aufweisen kann und R¹⁹ bis R²¹ zusammen verknüpft sein können, um einen Ring zu bilden, der einen Substituenten aufweisen kann.

11. Durch aktive Strahlung härtbare Tintenstrahltintenzusammensetzung zur Verwendung beim Tintenstrahldrucken, umfassend:
die durch aktive Strahlung härtbare Tintenzusammensetzung nach einem der Ansprüche 1 bis 10.

12. Druckverfahren umfassend:
das Beschichten eines Tinte aufnehmenden Materials mit der durch aktive Strahlung härtbaren Tintenzusammensetzung nach einem der Ansprüche 1 bis 10 oder mit der durch aktive Strahlung härtbaren Tintenstrahltintenzusammensetzung nach Anspruch 11 und
das Bestrahlen der schichtförmig aufgebrachten, durch aktive Strahlung härtbaren Tintenzusammensetzung oder der schichtförmig aufgebrachten, durch aktive Strahlung härtbaren Tintenstrahltintenzusammensetzung mit aktiven Strahlen zum Härten.

## Revendications

1. Composition d'encre durcissable par rayons actifs comprenant:
un initiateur de photoréaction générant à la fois une base et un radical par irradiation de rayons actifs, et
un composé possédant à la fois un groupe fonctionnel réactif avec la base et un groupe fonctionnel réactif avec le radical.

2. Composition d'encre durcissable par rayons actifs selon la revendication 1, où au moins l'un du groupe fonctionnel réactif avec la base et du groupe fonctionnel réactif avec le radical est un groupe fonctionnel réactif avec à la fois la base et le radical.

3. Composition d'encre durcissable par rayons actifs selon la revendication 2, où le composé possède deux ou plusieurs du groupe fonctionnel réactif avec à la fois la base et le radical, et au moins l'un des deux ou plus groupes fonctionnels réactifs avec à la fois la base et le radical possède une structure moléculaire différente de l'autre groupe fonctionnel ou des autres groupes fonctionnels.

4. Composition d'encre durcissable par rayons actifs selon la revendication 1 ou 2, où le groupe fonctionnel réactif avec la base est un groupe fonctionnel qui est réactif avec la base mais n'est pas réactif avec le radical.

5. Composition d'encre durcissable par rayons actifs selon la revendication 1, où le composé possédant à la fois le groupe fonctionnel réactif avec la base et le groupe fonctionnel réactif avec le radical est un composé possédant à la fois un groupe fonctionnel qui est réactif avec la base mais n'est pas réactif avec le radical et un groupe fonctionnel réactif avec à la fois la base et le radical.

6. Composition d'encre durcissable par rayons actifs selon la revendication 4 ou 5, où le groupe fonctionnel qui est réactif avec la base mais n'est pas réactif avec le radical est un groupe époxy ou un groupe lactone.

7. Composition d'encre durcissable par rayons actifs selon l'une quelconque des revendications 2, 3, 5 et 6, où le groupe fonctionnel réactif avec à la fois la base et le radical est un groupe (méth)acryle, un groupe vinyle, un groupe mercapto, un groupe silyle ou un groupe maléimide.

8. Composition d'encre durcissable par rayons actifs selon l'une quelconque des revendications 1 à 7, où l'initiateur de photoréaction est un composé représenté par la Formule générale (I): 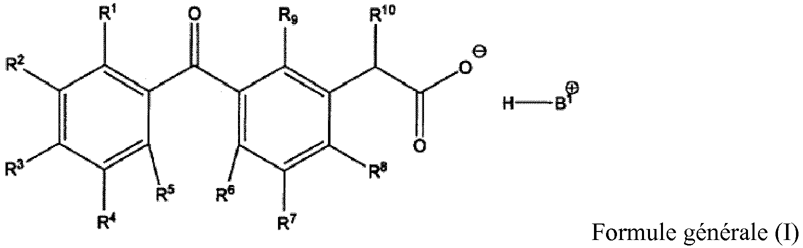 où B¹ indique une base, et R¹ à R¹⁰ représentent chacun indépendamment un atome d'hydrogène, un groupe alkyle qui peut avoir un substituant, un groupe alcoxy qui peut avoir un substituant, un groupe aryle qui peut avoir un substituant, un groupe hydroxy, un atome d'halogène ou un groupe cyano.

9. Composition d'encre durcissable par rayons actifs selon l'une quelconque des revendications 1 à 8, où l'initiateur de photoréaction est un composé représenté par la Formule générale (II): 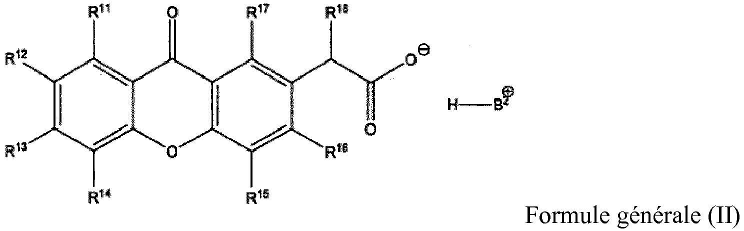 où B² indique une base, et R¹¹ à R¹⁸ représentent chacun indépendamment un atome d'hydrogène, un groupe alkyle qui peut avoir un substituant, un groupe alcoxy qui peut avoir un substituant, un groupe aryle qui peut avoir un substituant, un groupe hydroxy, un atome d'halogène ou un groupe cyano.

10. Composition d'encre durcissable par rayons actifs selon la revendication 8 ou 9, où H-B¹ ou H-B² dans la Formule générale (I) ou (II) est un dérivé amidine, un dérivé guanidine, un dérivé phosphazène ou un groupe représenté par la Formule générale (III) ci-dessous: 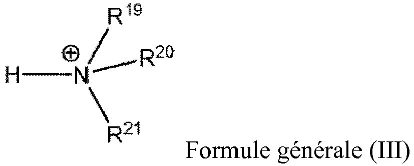 où R¹⁹ à R²¹ représentent chacun indépendamment un atome d'hydrogène, un groupe alkyle qui peut avoir un substituant, un groupe cycloalkyle, un groupe aryle ou un groupe arylalkyle, et R¹⁹ à R²¹ peuvent être liés ensemble pour former un cycle qui peut avoir un substituant.

11. Composition d'encre durcissable par rayons actifs pour l'utilisation dans l'impression par jet d'encre, comprenant:
la composition d'encre durcissable par rayons actifs selon l'une quelconque des revendications 1 à 10.

12. Procédé d'impression comprenant:
le revêtement d'un matériau de réception d'encre avec la composition d'encre durcissable par rayons actifs selon l'une quelconque des revendications 1 à 10 ou avec la composition d'encre durcissable par rayons actifs selon la revendication 11, et
l'irradiation de la composition d'encre durcissable par rayons actifs revêtue ou de la composition d'encre par jet d'encre durcissable par rayons actifs revêtue avec des rayons actifs pour le durcissement.
